# EUROPÄISCHE PATENTSCHRIFT

(11) **EP 3 453 917 B1**
(45) Veröffentlichungstag und Bekanntmachung des Hinweises auf die Patenterteilung: **04.08.2021**
(21) Anmeldenummer: 17189840.6
(22) Anmeldetag: 07.09.2017
(51) Int. Cl.: F16H 7/02, B60K 6/40, F16H 57/04

(54) **ZUGMITTELTRIEB FÜR EIN KRAFTFAHRZEUGGETRIEBE**
TRACTION DRIVE FOR A MOTOR VEHICLE TRANSMISSION
MOYEN DE TRACTION POUR UNE TRANSMISSION DE VÉHICULE AUTOMOBILE

(43) Veröffentlichungstag der Anmeldung: 13.03.2019
(73) Patentinhaber: ZF Friedrichshafen AG, 88046 Friedrichshafen (DE)
(72) Erfinder: Holst, Sven, 88074 Meckenbeuren (DE); Firzlaff, Uwe, 88690 Uhldingen (DE)
(74) Vertreter: ZF Friedrichshafen AG

(56) Entgegenhaltungen:
- EP-A1- 0 911 514
- WO-A1-2005/123434
- DE-A1- 10 035 431
- US-A1- 2004 154 846

## Beschreibung

Die Erfindung betrifft einen Zugmitteltrieb für ein Kraftfahrzeuggetriebe, mit einem ersten Zugmittelrad, das mit einem ersten Getriebebauteil drehfest verbindbar ist, einem zweiten Zugmittelrad, das mittels eines Zugmittels mit dem ersten Zugmittelrad triebtechnisch verbunden ist und das mit einem zweiten Getriebebauteil drehfest verbindbar ist, und einem Lagerzapfen zum Abstützen des ersten Zugmittelrads. So ein Zugmitteltrieb ist aus der EP 0911514 A1 bekannt.

Außerdem betrifft die Erfindung ein Kraftfahrzeuggetriebe mit einem solchen Zugmitteltrieb. Darüber hinaus betrifft die Erfindung ein Kraftfahrzeug mit einem solchen Zugmitteltrieb oder dem Kraftfahrzeuggetriebe.

Aus dem Stand der Technik ist der Einsatz von einem Zugmitteltrieb in einem Kraftfahrzeuggetriebe bekannt. So ist beispielsweise aus der WO 2005 /123 434 A1 ein Kettentrieb bekannt, bei dem ein erstes Zugmittelrad mit einer Rotorwelle einer elektrischen Maschine drehfest verbunden ist. Ein zweites Zugmittelrad ist mittels einer Doppelkupplung mit einer Getriebeeingangswelle triebtechnisch verbunden. Das erste Zugmittelrad ist außerdem mittels einer Kette mit dem zweiten Zugmittelrad triebtechnisch verbunden.

Die DE 100 35 431 A1 beschreibt ein Fahrzeugantriebssystem mit einem dynamoelektrischen Maschinenmechanismus, der über eine Unterstützungskupplung mit einer Eingangswelle des Getriebes in Eingriff gebracht werden kann. Die Unterstützungskupplung enthält eine Riemenscheibe, die an der Eingangswelle befestigt und drehbar gehaltert ist. Auf der Seite der Eingangswelle enthält die Unterstützungskupplung eine Scheibe, welche nach Art einer Keilwelle mit der Eingangswelle verbunden ist. Dadurch wird eine axiale Bewegung zwischen Eingangswelle und Scheibe zugelassen, jedoch keine Drehbewegung erlaubt.

Beim Betrieb des Getriebes kann es vorkommen, dass sich die Getriebeeingangswelle und/oder die Doppelkupplung und somit das zweite Zugmittelrad in axialer Richtung bewegen. Der daraus resultierende axiale Versatz zwischen dem ersten Zugmittelrad und dem zweiten Zugmittelrad wird durch die einzelnen Kettenglieder der Kette ausgeglichen. Nachteilig bei dieser Ausführung ist jedoch, dass beim Ausgleich des axialen Versatzes zwischen dem ersten und zweiten Zugmittelrad ein hoher Verschleiß der Kette auftritt. Zudem muss die Kette eine bestimmte Länge aufweisen, damit sie den axialen Versatz zwischen dem ersten Zugmittelrad und dem zweiten Zugmittelrad ausgleichen kann. Dadurch weist der Zugmitteltrieb eine bestimmte Größe auf, so dass er bei Getrieben nicht eingesetzt werden kann, bei denen wenig Bauraum vorhanden ist.

Die Aufgabe der Erfindung besteht daher darin, einen Zugmitteltrieb anzugeben, bei dem weniger Verschleiß auftritt und der in Getrieben eingesetzt werden kann, bei denen wenig Bauraum zur Verfügung steht.

Die Aufgabe der Erfindung wird durch einen Zugmitteltrieb der eingangs genannten Art gelöst, bei dem das erste Zugmittelrad relativ zum Lagerzapfen axial beweglich angeordnet ist.

Der erfindungsgemäße Zugmitteltrieb weist den Vorteil auf, dass aufgrund der axialen Bewegbarkeit des ersten Zugmittelrads kein axialer Versatz zwischen dem ersten Zugmittelrad und dem zweiten Zugmittelrad auftritt. Dementsprechend muss bei dem erfindungsgemäßen Zugmitteltrieb das Zugmittel keinen axialen Versatz zwischen dem ersten Zugmittelrad und dem zweiten Zugmittelrad ausgleichen, was die Lebensdauer des Zugmittels erhöht. Ein weiterer Vorteil besteht darin, dass der Zugmitteltrieb kompakt ausgebildet sein kann, weil der axiale Versatz zwischen dem ersten Zugmittelrad und dem zweiten Zugmittelrad nicht mehr durch das Zugmittel ausgeglichen wird, sondern durch die Axialbewegung des ersten Zugmittelrads relativ zum Lagerzapfen. Insofern kann der Zugmitteltrieb ein kurzes Zugmittel aufweisen und somit in Getrieben eingesetzt werden, bei denen nur wenig Bauraum zur Verfügung steht.

Unter einem Zugmittel kann ein Kraftübertragungsmittel verstanden werden, welches in einer Linearrichtung auf Zug belastet werden kann, um eine Kraft von dem ersten Zugmittelrad auf das zweite Zugmittelrad zu übertragen. Beispielsweise kann ein Zugmittel eine Kette sein, die Kettenglieder mit Öffnungen aufweist, in welche einzelne Formschlüsse der Zugmittelräder eingreifen. Alternativ dazu kann das Zugmittel auch als Riemen ausgebildet sein, insbesondere als Zahnriemen.

Die Richtungsangaben "axial" und "radial" beziehen sich, sofern nichts Gegenteiliges angegeben ist, auf eine Mittelachse des Getriebes. Die Mittelachse kann beispielsweise der Drehachse einer Eingangswelle des Getriebes entsprechen.

Bei einer besonderen Ausführung kann das erste Zugmittelrad einen kleineren Durchmesser aufweisen als zweite Zugmittelrad. Dadurch lässt sich auf einfache Weise eine Übersetzung zwischen dem ersten Getriebebauteil und dem zweiten Getriebebauteil realisieren.

Der Lagerzapfen und ein Getriebegehäuse des Getriebes können einstückig ausgeführt sein. So kann der Lagerzapfen Bestandteil des Getriebegehäuses sein. Das Getriebegehäuse ist beim Betrieb des Zugmitteltriebs ortsfest angeordnet und dreht sich nicht. Alternativ kann der Lagerzapfen einen Befestigungsabschnitt aufweisen, der mit einem anderen Befestigungsabschnitt des Getriebegehäuses form- und/oder kraftschlüssig verbindbar ist. Insbesondere kann der Lagerzapfen mittels einer Schraubverbindung mit dem Getriebegehäuse verbunden sein. Dadurch lässt sich eine wieder lösbare Verbindung zwischen dem Lagerzapfen und dem Getriebegehäuse realisieren.

Bei einer weiteren, alternativen Ausführung kann der Zugmitteltrieb ein Verbindungsmittel aufweisen, das mit dem Lagerzapfen wieder lösbar verbindbar ist und mittels dem der Lagerzapfen mit dem Getriebegehäuse form- und/oder kraftschlüssig verbindbar ist. Das Verbindungsmittel kann eine Hohlschraube sein, die mittels einer Schraubverbindung mit dem Getriebegehäuse wieder lösbar verbindbar ist. Darüber hinaus kann das Verbindungsmittel mittels einer form- und/oder kraftschlüssigen Verbindung mit dem Lagerzapfen wieder lösbar verbunden sein. Der Lagerzapfen kann einen Teil des Verbindungsmittels, insbesondere der Hohlschraube, wenigstens teilweise, insbesondere vollständig, umschließen. Das Verbindungsmittel kann koaxial zu dem Lagerzapfen angeordnet sein.

Bei einer besonderen Ausführung kann der Zugmitteltrieb ein Lager aufweisen, mittels dem sich das erste Zugmittelrad, insbesondere ausschließlich, in radialer Richtung an dem Lagerzapfen abstützt. Das Lager kann ein Nadellager sein. Außerdem kann das Lager derart ausgebildet sein, dass es eine axiale Bewegung des ersten Zugmittelrads relativ zum Lagerzapfen zulässt.

Damit bei einer axialen Bewegung des ersten Zugmittelrads relativ zum Lagerzapfen der Verschleiß des Lagers und/oder des ersten Zugmittelrads und/oder des Lagerzapfens gering ist, kann eine Anlauffläche für das erste Zugmittelrad vorgesehen sein. Die Anlauffläche kann derart bearbeitet, wie beispielsweise gehärtet, sein und/oder aus einem Material bestehen, dass bei einer Bewegung des ersten Zugmittelrads relativ zu dem Lagerzapfen der Verschleiß minimiert wird. Die Anlauffläche kann Bestandteil des Lagerzapfens sein.. Somit lässt sich bei einer Bewegung des Lagers und/oder des ersten Zugmittelrads in axialer Richtung der Verschleiß des Lagers reduzieren.

Der Lagerzapfen kann einen, insbesondere umlaufenden, Abstützbereich aufweisen, welcher die Anlauffläche bildet Somit kann ein Verschleiß des ersten Zugmittelrads reduziert werden, wenn das erste Zugmittelrad an dem Abstützbereich anliegt. Der Abstützbereich kann in radialer Richtung von dem restlichen Bereich des Lagerzapfens vorstehen.

Der Zugmitteltrieb kann eine Buchse aufweisen, die den Lagerzapfen, insbesondere einen Teil des Lagerzapfens, wenigstens teilweise, insbesondere vollständig, umschließt und die Anlauffläche aufweist. Die Buchse kann einen, insbesondere umlaufenden, Bund zum axialen Abstützen des ersten Zugmittelrads aufweisen. Dabei kann die Anlauffläche zusätzlich Bestandteil des Bunds sein. Dies bietet den Vorteil, dass der Verschleiß des ersten Zugmittelrads und/oder des Lagers reduziert wird, wenn das erste Zugmittelrad und/oder das Lager am Bund anliegt.

Bei einer besonderen Ausführung kann Öl aus einer Ölleitung, die sich durch den Lagerzapfen in axialer Richtung erstreckt, zu dem Lager zugeführt werden. Dadurch kann eine Schmierung des Lagers auf einfache Weise erreicht werden.

Insbesondere kann das in der Ölleitung befindliche Öl durch eine im Lagerzapfen befindliche Bohrung zu dem Lager zugeführt werden. Alternativ kann die Bohrung in dem Verbindungsmittel angeordnet sein. Das Verbindungsmittel kann einen Teil der Ölleitung aufweisen. Alternativ kann die Bohrung in einem Koppelstück angeordnet sein, das dem Verbindungsmittel strömungstechnisch nachgeschaltet ist und einen anderen Teil der Ölleitung aufweist. Natürlich sind auch Ausführungen möglich, bei denen das jeweilige Bauteil mehrere Bohrungen aufweist. Die Bohrungen können entlang der Umfangsrichtung des jeweiligen Bauteils beabstandet zueinander angeordnet sein. Das Koppelstück, das Verbindungsmittel und der Lagerzapfen können koaxial zueinander angeordnet sein. Der Lagerzapfen kann einen Teil des Koppelstücks, insbesondere vollständig, umschließen.

Der Zugmitteltrieb kann ein Ölleitelement aufweisen, das derart angeordnet und ausgebildet ist, dass es das durch das Lager geströmte Öl in Richtung zum Zugmittel umlenkt. Das Ölleitelement kann mit der Buchse, insbesondere einstückig, verbunden sein. Insbesondere kann das Ölleitelement an einem Ende der Buchse angeordnet und/oder mit dem Ende der Buchse drehfest verbunden sein. Alternativ kann das Ölleitelement an dem Lagerzapfen, insbesondere dem Abstützbereich des Lagerzapfens, angeordnet und/oder mit dem Lagerzapfen drehfest verbunden sein. Durch das Ölleitelement kann auf einfache Weise sichergestellt werden, dass das Zugmittel mit dem durch das Lager geströmten Öl beaufschlagt wird.

Das erste Zugmittelrad kann eine andere Bohrung, insbesondere mehrere andere Bohrungen, aufweisen, durch die das durch die Bohrung geströmte Öl aus dem ersten Zugmittelrad ausströmt. Darüber hinaus kann das erste Zugmittelrad ein weiteres Ölleitelement aufweisen, das das durch die andere Bohrung geströmte Öl in Richtung zum Zugmittel umlenkt. Durch das weitere Ölleitelement wird sichergestellt, dass das Zugmittel von einer anderen Seite mit Öl beaufschlagt wird. Im Ergebnis wird durch das Ölleitelement und das weitere Ölleitelement erreicht, dass das Zugmittel von beiden axialen Seiten des Zugmittels mit Öl beaufschlagt wird.

Die Bohrung und/oder die andere Bohrung können stromaufwärts des Lagers angeordnet sein. Die andere Bohrung kann stromabwärts der Bohrung angeordnet sein. Dabei kann ein durch das erste Zugmittelrad umschlossener Aufnahmeraum vorhanden sein, in den das aus der Bohrung ausgeströmte Öl einströmt. Ausgehend von dem Aufnahmeraum kann ein Teil des Öls zum Lager strömen und ein anderer Teil des Öls kann durch die andere Bohrung aus dem ersten Zugmittelrad ausströmen.

Von besonderem Vorteil ist ein Kraftfahrzeuggetriebe mit einem erfindungsgemäßen Zugmitteltrieb. Dabei kann das erste Zugmittelrad mit dem ersten Getriebebauteil drehfest verbunden sein. Das zweite Zugmittelrad kann mit dem zweiten Getriebebauteil drehfest verbunden, insbesondere verschweißt, sein. Das erste Getriebebauteil kann eine Rotorwelle der elektrischen Maschine sein.

Als drehfeste Verbindung wird eine Verbindung zwischen zwei Elementen verstanden, die derart ausgebildet und angeordnet ist, dass die beiden, miteinander wirkverbundenen Elemente stets die gleiche Drehzahl aufweisen. Dies ist nicht der Fall, wenn beispielsweise zwischen den beiden miteinander verbundenen Elementen ein Schaltelement angeordnet ist, das sich im geöffneten Zustand befindet. Die drehfeste Verbindung kann beispielsweise durch eine Steckverzahnung realisiert werden.

Die elektrische Maschine besteht zumindest aus einem Stator und einem drehbar gelagerten Rotor und ist in einem motorischen Betrieb dazu eingerichtet, elektrische Energie in mechanische Energie in Form von Drehzahl und Drehmoment zu wandeln, sowie in einem generatorischen Betrieb mechanische Energie in elektrische Energie in Form von Strom und Spannung zu wandeln.

Als Rotorwelle wird eine Welle bezeichnet, die mit dem Rotor der elektrischen Maschine drehfest verbunden ist. Dabei kann der Rotor auf der Rotorwelle angeordnet sein.

Das zweite Getriebebauteil kann eine Welle sein, die mit dem zweiten Zugmittelrad drehfest verbunden ist. Alternativ kann das zweite Getriebebauteil ein Kupplungsbestandteil einer Kupplung, insbesondere einer Doppelkupplung oder einer Dreifachkupplung, sein. Der Kupplungsbestandteil kann beispielsweise ein Lamellenträger sein. Beim Betrieb des Getriebes kann sich das zweite Getriebebauteil und somit das zweite Zugmittelrad in axialer Richtung bewegen.

Das erste Getriebebauteil und das zweite Getriebebauteil können radial versetzt zueinander angeordnet sein. Insbesondere kann eine Mittelachse der Rotorwelle in radialer Richtung versetzt zu einer Mittelachse der Welle des zweiten Getriebebauteils oder zu einer Mittelachse der Kupplung angeordnet sein.

Von besonderem Vorteil ist auch ein Kraftfahrzeug mit einem Zugmitteltrieb oder einem Kraftfahrzeuggetriebe. Das Kraftfahrzeuggetriebe kann ein Automatgetriebe sein, mittels dem mehrere Gänge mit unterschiedlicher Übersetzung zwischen einer Getriebeeingangswelle und einer Getriebeausgangswelle realisierbar sind.

In den Figuren ist der Erfindungsgegenstand schematisch dargestellt und wird anhand der Figuren nachfolgend beschrieben, wobei gleiche oder gleichwirkende Elemente zumeist mit denselben Bezugszeichen versehen sind. Dabei zeigen:
- Fig. 1: eine Schnittdarstellung des erfindungsgemäßen Getriebes mit dem erfindungsgemäßen Zugmitteltrieb gemäß einem ersten Ausführungsbeispiel,
- Fig. 2: eine vergrößerte Darstellung eines Teils des erfindungsgemäßen Zugmitteltriebs gemäß dem ersten Ausführungsbeispiel,
- Fig. 3: eine vergrößerte Darstellung eines Teils eines erfindungsgemäßen Zugmitteltriebs gemäß einem zweiten Ausführungsbeispiel,
- Fig. 4: eine vergrößerte Darstellung eines Teils eines erfindungsgemäßen Zugmitteltriebs gemäß einem dritten Ausführungsbeispiel,
- Fig. 5: eine vergrößerte Darstellung eines Teils eines erfindungsgemäßen Zugmitteltriebs gemäß einem vierten Ausführungsbeispiel,
- Fig. 6: ein Kraftfahrzeug mit dem erfindungsgemäßen Zugmitteltrieb.

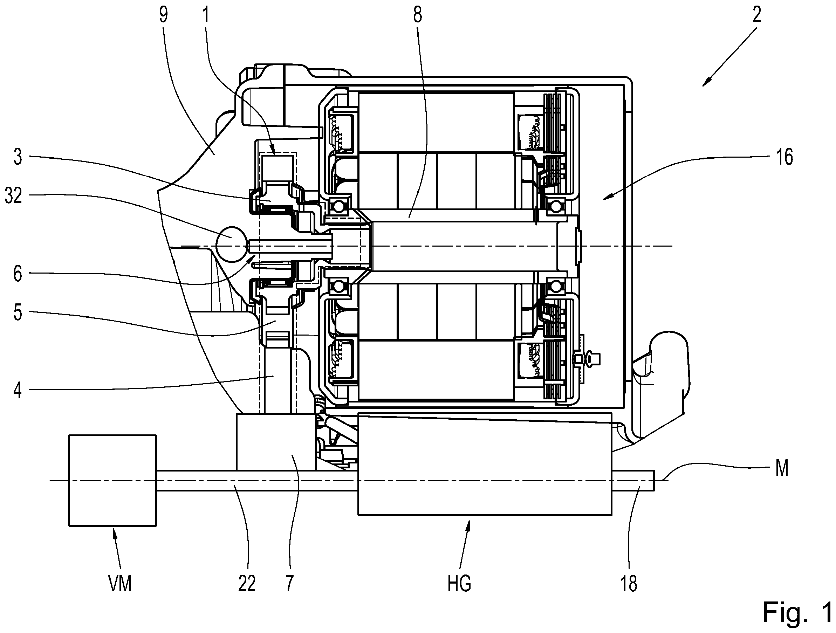

Figur 1 zeigt einen Teil eines Kraftfahrzeuggetriebes 2 mit einem Zugmitteltrieb 1. Der Zugmitteltrieb 1 weist ein erstes Zugmittelrad 3 auf, das mit einem ersten Getriebebauteil 8 drehfest verbunden ist. Das erste Getriebebauteil 8 ist eine Rotorwelle einer elektrischen Maschine 16. Der Zugmitteltrieb 1 weist einen Lagerzapfen 6 zum Abstützen des ersten Zugmittelrads 3 auf. Das erste Zugmittelrad 3 ist relativ zum Lagerzapfen 6 axial beweglich angeordnet. Der Lagerzapfen 6 ist mit einem Getriebegehäuse 9 einstückig ausgeführt. Dabei steht der Lagerzapfen 6 in axialer Richtung von einer Innenwand des Getriebegehäuses 9 hervor.

Darüber hinaus weist der Zugmitteltrieb 1 ein zweites Zugmittelrad 4 auf, das mittels eines Zugmittels 5 in Form beispielsweise einer Kette mit dem ersten Zugmittelrad 3 triebtechnisch verbunden ist. Das zweite Zugmittelrad 4 ist mit einem zweiten Getriebebauteil 7 drehfest verbunden. Das zweite Getriebebauteil 7 ist ein in Figur 1 nicht näher dargestellter Kupplungsbestandteil, wie beispielsweise ein Lamellenträger, eine Doppelkupplung, eine Dreifachkupplung, ein Drehmomentwandler oder ein Kupplungsgehäuse. Beim Betrieb des Getriebes 2 kann sich das zweite Getriebebauteil 7 axial bewegen.

Das zweite Getriebebauteil 7 ist mit einer Getriebeeingangswelle 22 triebtechnisch verbunden. Die Getriebeeingangswelle 22 ist mit einer Kraftfahrzeugantriebseinheit VM, wie beispielsweise einem Verbrennungsmotor, triebtechnisch verbunden. Darüber hinaus ist die Getriebeeingangswelle 22 mit zumindest einem Bestandteil eines Hauptgetriebes HG triebtechnisch verbunden. Das Hauptgetriebe HG weist beispielsweise in Figur 1 nicht näher dargestellte Radsätze und Schaltelemente auf. Eine Getriebeausgangswelle 18 ist zumindest mit einem der Bestandteile des Hauptgetriebes HG triebtechnisch verbunden. Durch Schalten eines oder mehrerer der Schaltelemente des Hauptgetriebes HG lassen sich mehrere Gänge mit jeweils unterschiedlichen Übersetzungen zwischen der Getriebeeingangswelle 22 und der Getriebeausgangswelle 18 realisieren.

Der in Figur 1 dargestellte Aufbau ist lediglich beispielhaft anzusehen. Zwischen Kraftfahrzeugantriebseinheit VM und dem zweiten Getriebebauteil kann zusätzlich eine Trennkupplung, eine Doppelkupplung, eine Dreifachkupplung, oder ein Drehmomentwandler mit Überbrückungskupplung angeordnet sein. Die Getriebeausgangswelle 18 und die Getriebeeingangswelle 22 können am selben axialen Ende des Hauptgetriebes HG angeordnet sein. Getriebeausgangswelle 18 und Getriebeeingangswelle 22 können voneinander unterschiedliche Drehachsen aufweisen, wie beispielsweise bei einem Getriebe für einen Front-Quer-Antrieb oder Heck-Quer-Antrieb eines Kraftfahrzeugs. Der in Figur 1 dargestellte Aufbau dient daher nur als exemplarisches Beispiel, und schränkt den Aufbau des erfindungsgemäßen Zugmitteltriebs nicht ein.
Die elektrische Maschine 16 und das zweite Getriebebauteil 7 sind in radialer Richtung bezogen auf eine Mittelachse M des Getriebes 2 versetzt zueinander angeordnet.

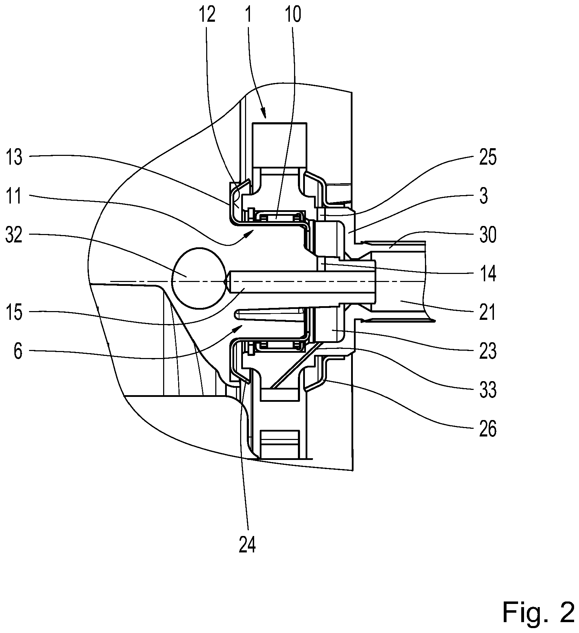

Figur 2 zeigt eine vergrößerte Darstellung eines Teils des Zugmitteltriebs 1. Der Zugmitteltrieb 1 weist ein Lager 10 auf, mittels dem sich das erste Zugmittelrad 3 an dem Lagerzapfen 6 in radialer Richtung abstützt. Das Lager 10 ist ein Nadellager, das eine axiale Bewegung des ersten Zugmittelrads 3 relativ zum Lagerzapfen 6 erlaubt.

Das Lager 10 liegt direkt auf einer Buchse 11, die einen Teil des Lagerzapfens 6 umschließt und radial zwischen dem Lager 10 und dem Lagerzapfen 6 angeordnet ist. Die Buchse 11 weist an einem Ende einen umlaufenden, radial hervorstehenden Bund 13 auf, der als Anlauffläche 12 zum axialen Abstützen des ersten Zugmittelrads 3 dient.

Der Lagerzapfen 6 weist eine Ölleitung 15 auf. Ein Ende der Ölleitung 15 ist mit einer weiteren Ölleitung 32 des Getriebes 1 fluidisch verbunden. Die weitere Ölleitung 32 ist innerhalb des Getriebegehäuses 9 angeordnet und/oder mit einer nicht dargestellten Ölhauptleitung fluidisch verbunden. Durch die Ölhauptleitung werden zusätzlich zu der elektrischen Maschine 16 weitere in den Figuren nicht dargestellte Komponenten des Getriebes 2 mit Öl versorgt. Die Ölleitung 15 mündet an ihrem anderen Ende in einem durch das erste Zugmittelrad 3 umschlossenen Hohlraum 21. Der Hohlraum 21 wird durch einen Koppelabschnitt 30 des ersten Zugmittelrads 3 teilweise begrenzt. Der Koppelabschnitt 30 ist Bestandteil des ersten Zugmittelrads 3 und ist mit der Rotorwelle 8 drehfest verbunden.

Der Lagerzapfen 6 weist eine Bohrung 14 auf, durch die das in der Ölleitung 15 befindliche Öl in einen durch das erste Zugmittelrad 3 begrenzten Aufnahmeraum 23 strömt. Ein Teil des in den Aufnahmeraum 23 eingeströmte Öl strömt anschließend durch das Lager 10 hindurch zum Bund 13. Der Bund 13 weist an einem Ende ein Ölleitelement 24 auf, welches dazu eingerichtet ist das durch das Lager 10 geströmte Öl in Richtung zum Zugmittel 5 umzulenken.

Das erste Zugmittelrad 3 weist außerdem zumindest eine andere Bohrung 25 auf, durch die ein Teil des in den Aufnahmeraum 23 eingeströmten Öls aus dem ersten Zugmittelrad 3 ausströmt. Das erste Zugmittelrad 3 weist ein weiteres Ölleitelement 26 auf, das derart ausgebildet und angeordnet ist, dass es das durch die andere Bohrung 25 ausgeströmte Öl in Richtung zum Zugmittel 5 umlenkt. Dadurch kann das Zugmittel 5 gekühlt und geschmiert werden.

Optional ist im ersten Zugmittelrad 3 zumindest eine zusätzliche Bohrung 33 vorgesehen. Durch die zumindest eine zusätzliche Bohrung 33 kann ein Teil des in den Aufnahmeraum 23 eingeströmten Öls direkt zur am Zugmittelrad 3 ausgebildete Zugmittelverzahnung geführt werden.

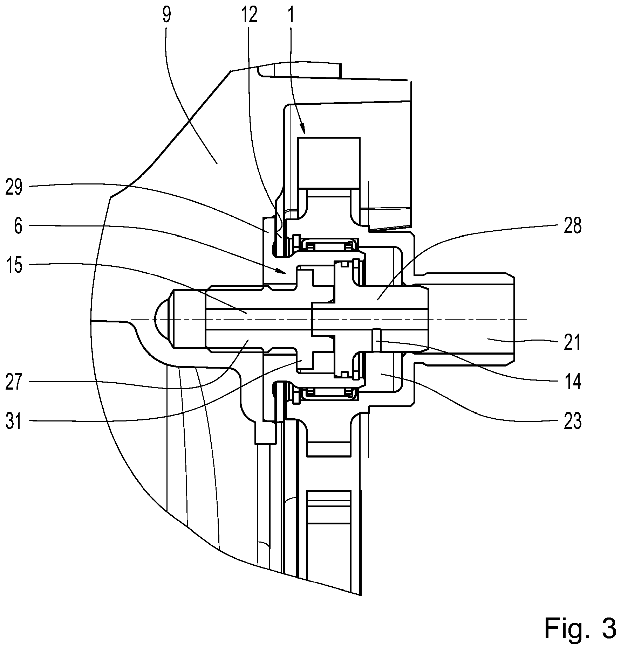

Figur 3 zeigt eine vergrößerte Darstellung eines Teils des Zugmitteltriebs 1 gemäß einem zweiten Ausführungsbeispiel. Der dargestellte Zugmitteltrieb 1 unterscheidet sich von dem in Figur 1 dargestellten Zugmitteltrieb 1 dadurch, dass der Lagerzapfen 6 und das Getriebegehäuse 9 nicht einstückig, sondern zweistückig ausgeführt sind.

So ist der Lagerzapfen 6 mittels eines Verbindungmittels 27 in Form einer Hohlschraube mit dem Getriebegehäuse 9 lösbar verbunden. Das Verbindungsmittel 27 weist an einem Ende ein Außengewinde auf, das mit einem Innengewinde des Getriebegehäuses 9 in Eingriff ist. Darüber hinaus weist das Verbindungsmittel 27 einen umlaufenden Vorsprung 31 auf, der im zusammengebauten Zustand des Zugmitteltriebs 1 den Lagerzapfen 6 gegen das Getriebegehäuse 9 drückt. Das Verbindungsmittel 27 weist einen Teil der Ölleitung 15 auf.

Ein weiterer Unterschied besteht darin, dass im Ausführungsbeispiel gemäß Figur 3 ein Koppelstück 28 vorhanden ist, das die Bohrung 14 und einen anderen Teil der Ölleitung 15 aufweist. Dabei ist ein Ende des Koppelstücks 28 mit dem Verbindungsmittel 27 verbunden und stromabwärts des Verbindungsmittels 27 angeordnet. Ein anderes Ende des Koppelstücks 28 ragt in den Hohlraum 21 ein. Insbesondere ist das Koppelstück 28 derart angeordnet und ausgebildet, dass der andere Teil der Ölleitung 15 mit dem Hohlraum 21 fluidisch verbunden ist. Durch das Koppelstück 28 wird verhindert, dass das gesamte Öl aus dem Verbindungsmittel 27 in den Aufnahmeraum 23 strömt. Das Koppelstück 28, das Verbindungsmittel 27 und der Lagerzapfen 6 sind koaxial zueinander angeordnet. Die weitere Ölleitung 32 ist in Figur 3 nicht dargestellt.

Ein weiterer Unterschied besteht darin, dass der Zugmitteltrieb 1 gemäß dem in Figur 3 dargestellten Ausführungsbeispiel keine Buchse 11 aufweist. Dabei weist der Lagerzapfen 6 einen Abstützbereich 29 auf, welcher die Anlauffläche 12 zum axialen Abstützen des ersten Zugmittelrads 3 bildet. Der Abstützbereich 29 steht in radialer Richtung von dem restlichen Lagerzapfen 6 vor. Der Zugmitteltrieb gemäß Figur 3 kann dennoch - wie in Figur 2 - zumindest eine zusätzliche Bohrung 33 und/oder zumindest eines der Ölleitelemente 24, 26 aufweisen. Das Ölleitelement 24 kann beispielsweise am Lagerzapfen 6 ausgebildet sein.

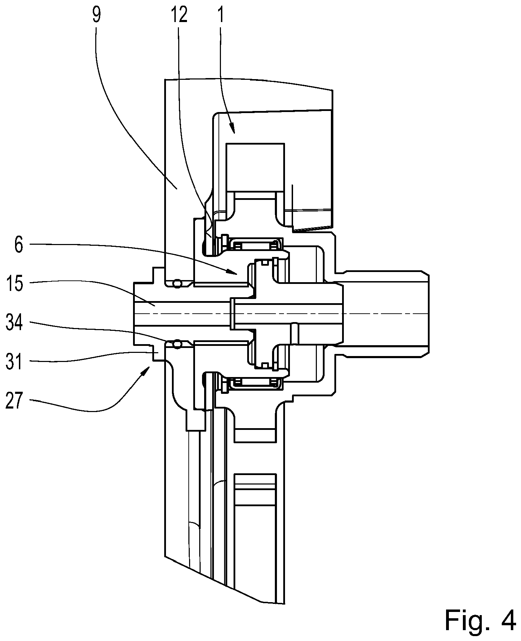

Figur 4 zeigt eine vergrößerte Darstellung eines Teils des Zugmitteltriebs 1 gemäß einem dritten Ausführungsbeispiel. Der dargestellte Zugmitteltrieb 1 unterscheidet sich von dem in Figur 3 dargestellten Zugmitteltrieb 1 in der Ausbildung des Verbindungsmittels 27, insbesondere in der Verbindung des Verbindungmittels 27 mit dem Getriebegehäuse 9 und dem Lagerzapfen 6.

So wird das in Figur 4 gezeigte Verbindungsmittel 27 mittels einer Schraubverbindung mit dem Lagerzapfen 6 verbunden. Der Vorsprung 31 des Verbindungsmittels 27 liegt beim zusammengebauten Zustand des Zugmitteltriebs 1 an dem Getriebegehäuse 9 an; die Abdichtung erfolgt durch einen O-Ring 34. Die Ölleitung 15 ist mit einer nicht dargestellten weiteren Ölleitung 32 verbunden, wobei die weitere Ölleitung 32 nicht im Getriebegehäuse 9 angeordnet ist.

Der Zugmitteltrieb gemäß Figur 4 kann dennoch - wie in Figur 2 - zumindest eine zusätzliche Bohrung 33 und/oder zumindest eines der Ölleitelemente 24, 26 aufweisen. Das Ölleitelement 24 kann beispielsweise am Lagerzapfen 6 ausgebildet sein.

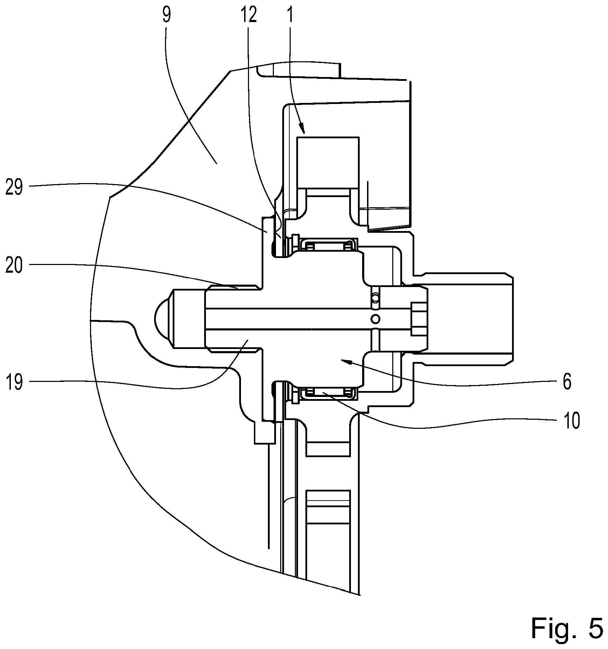

Figur 5 zeigt eine vergrößerte Darstellung eines Teils des Zugmitteltriebs 1 gemäß einem vierten Ausführungsbeispiel. Der dargestellte Zugmitteltrieb 1 unterscheidet sich von dem in Figur 1 dargestellten Zugmitteltrieb 1 dadurch, dass der Lagerzapfen 6 und das Getriebegehäuse 9 nicht einstückig, sondern zweistückig ausgeführt sind.

So kann der Lagerzapfen 6 mittels eines Befestigungsabschnitts 19 mit einem anderen Befestigungsabschnitt 20 des Getriebegehäuses 9 wieder lösbar verbunden, insbesondere verschraubt, werden. So weisen der Befestigungsabschnitt 19 und der andere Befestigungsabschnitt 20 jeweils ein Gewinde auf. Die weitere Ölleitung 32 ist in Figur 5 nicht dargestellt.

Ein weiterer Unterschied besteht darin, dass der Zugmitteltrieb 1 gemäß dem in Figur 5 dargestellten Ausführungsbeispiel keine Buchse 11 aufweist. Die Anlauffläche 12 ist somit Bestandteil des Lagerzapfens 6.

Der Zugmitteltrieb gemäß Figur 5 kann dennoch - wie in Figur 2 - zumindest eine zusätzliche Bohrung 33 und/oder zumindest eines der Ölleitelemente 24, 26 aufweisen. Das Ölleitelement 24 kann beispielsweise am Lagerzapfen 6 ausgebildet sein.

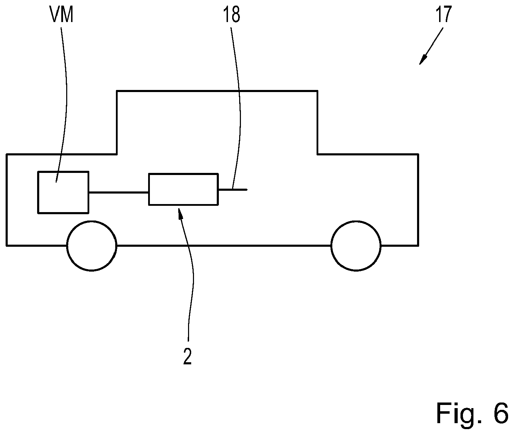

Figur 6 zeigt ein Kraftfahrzeug 17 mit dem erfindungsgemäßen Kraftfahrzeuggetriebe 2. Wie aus Figur 6 ersichtlich ist, ist das Kraftfahrzeuggetriebe 2 mit der Kraftfahrzeug-Antriebseinheit VM triebtechnisch verbunden. Das Kraftfahrzeuggetriebe 2 kann mittels der Getriebeausgangswelle 18 mit anderen Bauteilen des Kraftfahrzeugs 17, wie beispielsweise einem in den Figuren nicht dargestellten Achs-differential, triebtechnisch verbunden sein.

### Bezugszeichen

- 1: Zugmitteltrieb
- 2: Kraftfahrzeuggetriebe
- 3: erstes Zugmittelrad
- 4: zweites Zugmittelrad
- 5: Zugmittel
- 6: Lagerzapfen
- 7: zweites Getriebebauteil
- 8: erstes Getriebebauteil
- 9: Getriebegehäuse
- 10: Lager
- 11: Buchse
- 12: Anlauffläche
- 13: Bund
- 14: Bohrung
- 15: Ölleitung
- 16: elektrische Maschine
- 17: Kraftfahrzeug
- 18: Getriebeausgangswelle
- 19: Befestigungsabschnitt
- 20: anderer Befestigungsabschnitt des Getriebegehäuses
- 21: Hohlraum
- 22: Getriebeeingangswelle
- 23: Aufnahmeraum
- 24: Ölleitelement
- 25: andere Bohrung
- 26: weiteres Ölleitelement
- 27: Verbindungsmittel
- 28: Koppelstück
- 29: Abstützbereich
- 30: Koppelabschnitt
- 31: Vorsprung
- 32: weitere Ölleitung
- 33: zusätzliche Bohrung
- 34: O-Ring

- M: Mittelachse
- HG: Hauptgetriebe
- VM: Kraftfahrzeugantriebseinheit

## Patentansprüche

1. Zugmitteltrieb (1) für ein Kraftfahrzeuggetriebe (2), mit einem ersten Zugmittelrad (3), das mit einem ersten Getriebebauteil (8) drehfest verbindbar ist, einem zweiten Zugmittelrad (4), das mittels eines Zugmittels (5) mit dem ersten Zugmittelrad (3) triebtechnisch verbunden ist und das mit einem zweiten Getriebebauteil (7) drehfest verbindbar ist, und einem Lagerzapfen (6) zum Abstützen des ersten Zugmittelrads (3), **dadurch gekennzeichnet, dass** das erste Zugmittelrad (3) relativ zum Lagerzapfen (6) axial beweglich angeordnet ist.

2. Zugmitteltrieb (1) nach Anspruch 1, **dadurch gekennzeichnet, dass** das erste Zugmittelrad (3) einen kleineren Durchmesser aufweist als das zweite Zugmittelrad (4).

3. Zugmitteltrieb (1) nach Anspruch 1 oder 2, **dadurch gekennzeichnet, dass**
a. der Lagerzapfen (6) und ein Getriebegehäuse (9) einstückig ausführbar sind oder dass
b. der Lagerzapfen (6) einen Befestigungsabschnitt (19) aufweist, der mit einem anderen Befestigungsabschnitt (20) eines Getriebegehäuses (9) form- und/oder kraftschlüssig wieder lösbar verbindbar ist oder dass
c. der Zugmitteltrieb (1) ein durch den Lagerzapfen (6) wenigstens teilweise umschlossenes Verbindungsmittel (27) aufweist, das mit dem Lagerzapfen (6) wieder lösbar verbindbar ist und mittels dem der Lagerzapfen (6) mit dem Getriebegehäuse (9) form- und/oder kraftschlüssig verbindbar ist.

4. Zugmitteltrieb (1) nach einem der Ansprüche 1 bis 3, **gekennzeichnet durch** ein Lager (10) mittels dem sich das erste Zugmittelrad (3) in radialer Richtung an dem Lagerzapfen (6) abstützt.

5. Zugmitteltrieb (1) nach Anspruch 4, **gekennzeichnet durch** eine Anlauffläche (12) für das erste Zugmittelrad (3).

6. Zugmitteltrieb (1) nach Anspruch 5, **dadurch gekennzeichnet, dass** das Lager (10) direkt auf dem Lagerzapfen (6) liegt, wobei die Anlauffläche (12) Bestandteil des Lagerzapfens (6) ist.

7. Zugmitteltrieb (1) nach Anspruch 5, **gekennzeichnet durch** eine Buchse (11), die den Lagerzapfen (6) wenigstens teilweise umschließt, wobei das Lager (10) in radialer Richtung über die Buchse (11) am Lagerzapfen (6) abgestützt ist, und wobei die Anlauffläche (12) Bestandteil der Buchse (11) ist.

8. Zugmitteltrieb (1) nach Anspruch 7, **dadurch gekennzeichnet, dass** die Buchse (11) einen radial nach außen abstehenden Bund (13) aufweist, an dem die Anlauffläche (12) ausgebildet ist.

9. Zugmitteltrieb (1) nach einem der Ansprüche 4 bis 8, **gekennzeichnet durch** eine Ölleitung (15), die sich durch den Lagerzapfen (6) in axialer Richtung erstreckt, wobei Öl aus der Ölleitung (15) durch zumindest eine Bohrung (14) zu dem Lager (10) zuführbar ist.

10. Zugmitteltrieb (1) nach Anspruch 9, **gekennzeichnet durch** ein Ölleitelement (24), das
a. derart angeordnet und ausgebildet ist, dass es das durch das Lager (10) geströmte Öl in Richtung zum Zugmittel (5) umlenkt und/oder das
b. an einem Ende des Bunds (13) angeordnet ist und/oder das
c. an dem Lagerzapfen (6) und/oder dem Getriebegehäuse (9) angeordnet ist.

11. Zugmitteltrieb (1) nach Anspruch 9 oder 10, **dadurch gekennzeichnet, dass** das erste Zugmittelrad (3) zumindest eine andere Bohrung (25), durch die das durch die Bohrung (14) geströmte Öl aus dem ersten Zugmittelrad (3) ausströmt, und ein weiteres Ölleitelement (26) aufweist, das das durch die andere Bohrung (25) geströmte Öl in Richtung zum Zugmittel (5) umlenkt.

12. Zugmitteltrieb (1) nach einem der Ansprüche 9 bis 11, **dadurch gekennzeichnet, dass** das das erste Zugmittelrad (3) zumindest eine zusätzliche Bohrung (33) aufweist, durch die das durch die Bohrung (14) geströmte Öl aus dem ersten Zugmittelrad (3) ausströmt und durch das erste Zugmittelrad (3) hindurch unmittelbar zu einer am ersten Zugmittelrad (3) ausgebildeten Zugmittelverzahnung führt.

13. Kraftfahrzeuggetriebe (2) mit einem Zugmitteltrieb (1) nach einem der Ansprüche 1 bis 12, **dadurch gekennzeichnet, dass** das erste Zugmittelrad (3) mit dem ersten Getriebebauteil (8) drehfest verbunden ist und dass das zweite Zugmittelrad (4) mit dem zweiten Getriebebauteil (7) drehfest verbunden ist.

14. Kraftfahrzeuggetriebe (2) nach Anspruch 13, **dadurch gekennzeichnet, dass**
a. das erste Getriebebauteil (8) eine Rotorwelle einer elektrischen Maschine (16) ist und/oder dass
b. das zweite Getriebebauteil (7) eine Welle, die mit dem zweiten Zugmittelrad (4) drehfest verbunden ist, oder ein Kupplungsbestandteil ist.

15. Kraftfahrzeuggetriebe (2) nach Anspruch 13 oder 14, **dadurch gekennzeichnet, dass** das erste Getriebebauteil (8) und das zweite Getriebebauteil (7) radial versetzt zueinander angeordnet sind.

16. Kraftfahrzeug mit einem Zugmitteltrieb (1) nach einem der Ansprüche 1 bis 11 oder einem Kraftfahrzeuggetriebe (2) nach einem der Ansprüche 13 bis 15.

## Claims

1. Traction mechanism drive (1) for a motor vehicle transmission (2), having a first traction mechanism wheel (3) which is connectable to a first transmission component (8) for conjoint rotation, a second traction mechanism wheel (4) which is connected in terms of drive to the first traction mechanism wheel (3) by a traction mechanism (5) and which is connectable to a second transmission component (7) for conjoint rotation, and a bearing journal (6) for supporting the first traction mechanism wheel (3), **characterized in that** the first traction mechanism wheel (3) is arranged in an axially movable manner relative to the bearing journal (6).

2. Traction mechanism drive (1) according to Claim 1, **characterized in that** the first traction mechanism wheel (3) has a smaller diameter than the second traction mechanism wheel (4).

3. Traction mechanism drive (1) according to Claim 1 or 2, **characterized in that**
a. the bearing journal (6) and a transmission housing (9) can formed integrally, or **in that**
b. the bearing journal (6) has a fastening section (19) which is connectable re-releasably in a form-fitting and/or force-fitting manner to another fastening section (20) of a transmission housing (9), or **in that**
c. the traction mechanism drive (1) has a connecting means (27) which is at least partially surrounded by the bearing journal (6) and is connectable re-releasably to the bearing journal (6) and by means of which the bearing journal (6) is connectable in a form-fitting and/or force-fitting manner to the transmission housing (9).

4. Traction mechanism drive (1) according to one of Claims 1 to 3, **characterized by** a bearing (10) by means of which the first traction mechanism wheel (3) is supported in the radial direction on the bearing journal (6).

5. Traction mechanism drive (1) according to Claim 4, **characterized by** an abutment surface (12) for the first traction mechanism wheel (3).

6. Traction mechanism drive (1) according to Claim 5, **characterized in that** the bearing (10) lies directly on the bearing journal (6), wherein the abutment surface (12) is a constituent part of the bearing journal (6).

7. Traction mechanism drive (1) according to Claim 5, **characterized by** a bushing (11) which at least partially surrounds the bearing journal (6), wherein the bearing (10) is supported in the radial direction on the bearing journal (6) via the bushing (11), and wherein the abutment surface (12) is a constituent part of the bushing (11).

8. Traction mechanism drive (1) according to Claim 7, **characterized in that** the bushing (11) has a radially outwardly protruding collar (13) on which the abutment surface (12) is formed.

9. Traction mechanism drive (1) according to one of Claims 4 to 8, **characterized by** an oil line (15) which extends in the axial direction through the bearing journal (6), wherein oil from the oil line (15) can be supplied through at least one bore (14) to the bearing (10).

10. Traction mechanism drive (1) according to Claim 9, **characterized by** an oil-conducting element (24) which
a. is arranged and designed in such a manner that it deflects the oil which is flowed through the bearing (10) towards the traction mechanism (5), and/or which
b. is arranged at one end of the collar (13), and/or which
c. is arranged on the bearing journal (6) and/or on the transmission housing (9).

11. Traction mechanism drive (1) according to Claim 9 or 10, **characterized in that** the first traction mechanism wheel (3) has at least one other bore (25) through which the oil which has flowed through the bore (14) flows out of the first traction mechanism wheel (3), and a further oil-conducting element (26) which deflects the oil which has flowed through the other bore (25) towards the traction mechanism (5).

12. Traction mechanism drive (1) according to one of Claims 9 to 11, **characterized in that** first traction mechanism wheel (3) has at least one additional bore (33) through which the oil which is flowed through the bore (14) flows out of the first traction mechanism wheel (3) and passes through the first traction mechanism wheel (3) directly to a traction mechanism toothing formed on the first traction mechanism wheel (3).

13. Motor vehicle transmission (2) having a traction mechanism drive (1) according to one of Claims 1 to 12, **characterized in that** the first traction mechanism wheel (3) is connected to the first transmission component (8) for conjoint rotation, and **in that** the second traction mechanism wheel (4) is connected to the second transmission component (7) for conjoint rotation.

14. Motor vehicle transmission (2) according to Claim 13, **characterized in that**
a. the first transmission component (8) is a rotor shaft of an electric machine (16), and/or **in that**
b. the second transmission component (7) is a shaft which is connected to the second traction mechanism wheel (4) for conjoint rotation, or is a clutch constituent part.

15. Motor vehicle transmission (2) according to Claim 13 or 14, **characterized in that** the first transmission component (8) and the second transmission component (7) are arranged radially offset from each other.

16. Motor vehicle having a traction mechanism drive (1) according to one of Claims 1 to 11 or having a motor vehicle transmission (2) according to one of Claims 13 to 15.

## Revendications

1. Entraînement à moyen de traction (1) pour une transmission de véhicule automobile (2), muni d'une première roue de moyen de traction (3), qui peut être reliée de manière immobile en rotation avec un premier composant de transmission (8), d'une deuxième roue de moyen de traction (4), qui est reliée pour l'entraînement au moyen d'un moyen de traction (5) avec la première roue de moyen de traction (3) et qui peut être reliée de manière immobile en rotation avec un deuxième composant de transmission (7), et d'un pivot (6) pour le support de la première roue de moyen de traction (3), **caractérisé en ce que** la première roue de moyen de traction (3) est agencée de manière mobile axialement par rapport au pivot (6).

2. Entraînement à moyen de traction (1) selon la revendication 1, **caractérisé en ce que** la première roue de moyen de traction (3) présente un diamètre plus petit que la deuxième roue de moyen de traction (4).

3. Entraînement à moyen de traction (1) selon la revendication 1 ou 2, **caractérisé en ce que**
a. le pivot (6) et un carter de transmission (9) peuvent être réalisés d'un seul tenant, ou **en ce que**
b. le pivot (6) comprend une section de fixation (19), qui peut être reliée de manière détachable par accouplement de forme et/ou de force avec une autre section de fixation (20) d'un carter de transmission (9), ou **en ce que**
c. l'entraînement à moyen de traction (1) comprend un moyen de liaison (27) au moins partiellement entouré par le pivot (6), qui peut être relié de manière détachable avec le pivot (6) et au moyen duquel le pivot (6) peut être relié par accouplement de forme et/ou de force avec le carter de transmission (9).

4. Entraînement à moyen de traction (1) selon l'une quelconque des revendications 1 à 3, **caractérisé par** un palier (10) au moyen duquel la première roue de moyen de traction (3) s'appuie en direction radiale sur le pivot (6).

5. Entraînement à moyen de traction (1) selon la revendication 4, **caractérisé par** une face de portée (12) pour la première roue de moyen de traction (3).

6. Entraînement à moyen de traction (1) selon la revendication 5, **caractérisé en ce que** le palier (10) est situé directement sur le pivot (6), la face de portée (12) étant un constituant du pivot (6).

7. Entraînement à moyen de traction (1) selon la revendication 5, **caractérisé par** une douille (11), qui entoure au moins partiellement le pivot (6), le palier (10) étant soutenu en direction radiale par l'intermédiaire de la douille (11) sur le pivot (6), et la face de portée (12) étant un constituant de la douille (11).

8. Entraînement à moyen de traction (1) selon la revendication 7, **caractérisé en ce que** la douille (11) comprend un collet (13) faisant saillie radialement vers l'extérieur, sur lequel la face de portée (12) est formée.

9. Entraînement à moyen de traction (1) selon l'une quelconque des revendications 4 à 8, **caractérisé par** une conduite d'huile (15), qui s'étend à travers le pivot (6) en direction axiale, de l'huile issue de la conduite d'huile (15) pouvant être acheminée jusqu'au palier (10) à travers au moins un alésage (14).

10. Entraînement à moyen de traction (1) selon la revendication 9, **caractérisé par** un élément de conduction d'huile (24), qui
a. est agencé et configuré de telle sorte qu'il dévie l'huile s'écoulant à travers le palier (10) en direction du moyen de traction (5) et/ou qui
b. est agencé à une extrémité du collet (13) et/ou qui
c. est agencé sur le pivot (6) et/ou le carter de transmission (9).

11. Entraînement à moyen de traction (1) selon la revendication 9 ou 10, **caractérisé en ce que** la première roue de moyen de traction (3) comprend au moins un autre alésage (25), à travers lequel l'huile s'écoulant à travers l'alésage (14) sort de la première roue de moyen de traction (3), et un élément de conduction d'huile supplémentaire (26), qui dévie l'huile s'écoulant à travers l'autre alésage (25) en direction du moyen de traction (5).

12. Entraînement à moyen de traction (1) selon l'une quelconque des revendications 9 à 11, **caractérisé en ce que** la première roue de moyen de traction (3) comprend au moins un alésage supplémentaire (33), à travers lequel l'huile s'écoulant à travers l'alésage (14) sort de la première roue de moyen de traction (3) et est acheminée à travers la première roue de moyen de traction (3) directement jusqu'à une denture de moyen de traction formée sur la première roue de moyen de traction (3).

13. Transmission de véhicule automobile (2) munie d'un entraînement à moyen de traction (1) selon l'une quelconque des revendications 1 à 12, **caractérisée en ce que** la première roue de moyen de traction (3) est reliée de manière immobile en rotation avec le premier composant de transmission (8) et **en ce que** la deuxième roue de moyen de traction (4) est reliée de manière immobile en rotation avec le deuxième composant de transmission (7).

14. Transmission de véhicule automobile (2) selon la revendication 13, **caractérisée en ce que**
a. le premier composant de transmission (8) est un arbre de rotor d'un moteur électrique (16) et/ou **en ce que**
b. le deuxième composant de transmission (7) est un arbre, qui est relié de manière immobile en rotation avec la deuxième roue de moyen de traction (4), ou est un constituant d'embrayage.

15. Transmission de véhicule automobile (2) selon la revendication 13 ou 14, **caractérisée en ce que** le premier composant de transmission (8) et le deuxième composant de transmission (7) sont agencés en décalage radial l'un par rapport à l'autre.

16. Véhicule automobile muni d'un entraînement à moyen de traction (1) selon l'une quelconque des revendications 1 à 11 ou d'une transmission de véhicule automobile (2) selon l'une quelconque des revendications 13 à 15.
